# EUROPEAN PATENT SPECIFICATION

(11) **EP 1 686 770 B1**
(45) Date of publication and mention of the grant of the patent: **12.03.2008**
(21) Application number: 06100424.8
(22) Date of filing: 17.01.2006
(51) Int. Cl.: H04M 1/18

(54) **Shower head suitable for telephone communication**
Duschkopf für Telephonverbindung
Pomme de douche pour communication téléphonique

(30) Priority: 31.01.2005 IT BO20050046
(43) Date of publication of application: 02.08.2006
(73) Proprietor: Packcenter S.r.l., 40026 Imola (Bologna) (IT)
(72) Inventor: Righini, Giuseppe, 40026 Imola (Bologna) (IT)
(74) Representative: Modiano, Micaela Nadia

(56) References cited:
- US-A- 5 140 254
- US-A- 5 625 688
- US-A1- 2003 211 838
- US-A1- 2004 078 891
- US-B1- 6 785 566

## Description

The present invention relates to a shower head suitable for telephone communication.

Taking a shower can often be a genuine problem for people who live alone or are temporarily alone at home, since while they are under the shower they cannot answer the telephone, even though they are waiting, for example, for an extremely urgent call.

Some kinds of portable telephone, known as cordless, are known which are adapted to communicate by radio with an ordinary control unit connected to the public telephone line provided in every home and can be moved to any point of the home; over time, these requirements have led the manufacturers of telephone sets to devise special cordless telephones which are resistant to water, for example by means of special sheaths which are made to size or by way of other waterproofing means. A safety cordless telephone for use in showers is known by US 5,625,688.

This is obviously a less than satisfactory solution, since it forces the user to have at home a cordless receiver which is specifically dedicated to use in the shower, with all the consequent drawbacks, for example problems of residual humidity which infiltrates between the parts, less than optimum hygiene conditions, and other problems which can be deduced easily. Moreover, it goes without saying that this solution requires the user to always carry with him or her the cordless receiver under the shower and that said receiver must always have its batteries sufficiently charged, with obvious inconvenience.

Another strongly felt problem is the potential danger that can affect a person who is alone under the shower (for example, an elderly or disabled person) who suddenly feels ill or has other health problems and often cannot receive in time the aid that he or she needs.

US2004/0078891 discloses a shower head combined with removable electronic media device comprising a housing inside which a first chamber, which is open in one direction and closed off in the other direction, and a second chamber are defined. The housing is provided with a handle including a duct for delivering water into the first chamber, said first chamber being provided with a plurality of nozzles for deliver water from the shower head. An electronic media device is housed inside the second chamber. In particular US2004/0078891 discloses an electronic media device of the type capable of playing stored digital audio data, said electronic media device comprising at least a memory unit for storing audio data, a speaker and a circuitry for reading the audio data from the memory unit and providing an audio signal to the speaker.

The aim of the present invention is to obviate the above-mentioned drawbacks and meet the mentioned requirements, by providing a shower head suitable for telephone communication which allows the user to receive calls even under the shower without having to have a specifically dedicated receiver.

Within this aim, an object of the present invention is to provide a shower head suitable for telephone communication which is reliable in use and is also capable of giving the greatest assurances of safety from any standpoint.

Another object of the present invention is to provide a shower head suitable for telephone communication which allows to quickly call for external help in situations in which the user is suddenly taken ill or affected by other threats to his or her health.

Another object of the present invention is to provide a shower head which is simple, relatively easy to provide in practice, safe in use, effective in operation, and has a relatively low cost.

This aim and these and other objects that will become better apparent hereinafter are achieved by the shower head as defined in claim 1.

Further characteristics and advantages of the present invention will become better apparent from the following detailed description of a preferred but not exclusive embodiment of a shower head suitable for telephone communication according to the invention, illustrated by way of non-limiting example in the accompanying drawings, wherein:
Figure 1 is a schematic perspective view of the shower head according to the invention, installed in a home;
Figure 2 is a front view of the shower head according to the invention;
Figure 3 is a detailed side elevation view of the shower head;
Figure 4 is a partially sectional front view of the shower head according to the invention.

In the examplary embodiments that follow, individual characteristics may actually be interchanged with other different characteristics that exist in other examplary embodiments.

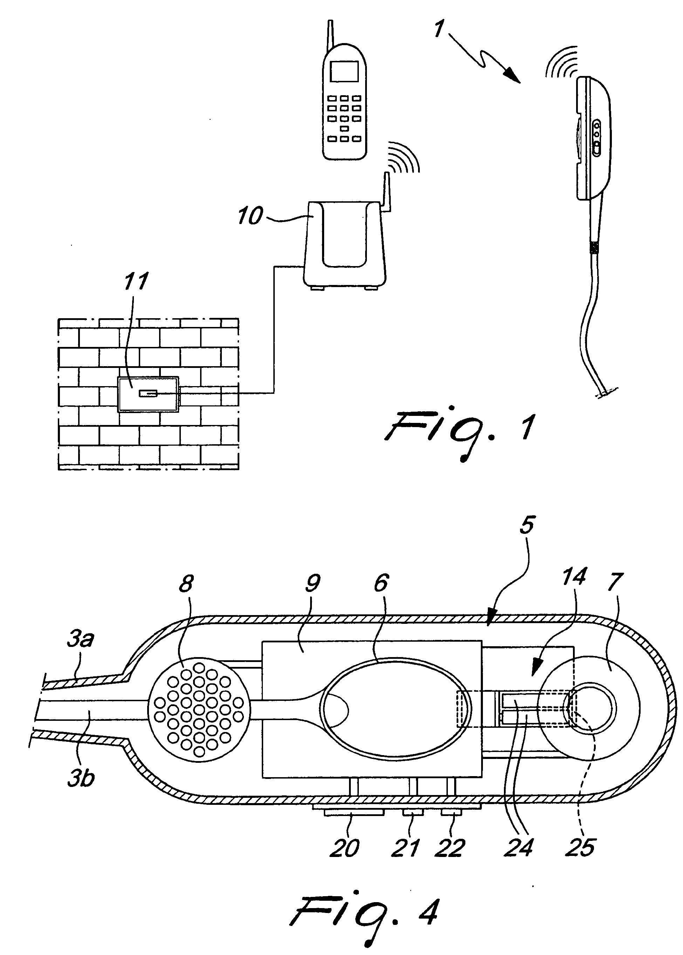

With reference to Figure 1, the reference numeral 1 generally designates a shower head suitable for telephone communication according to the invention.

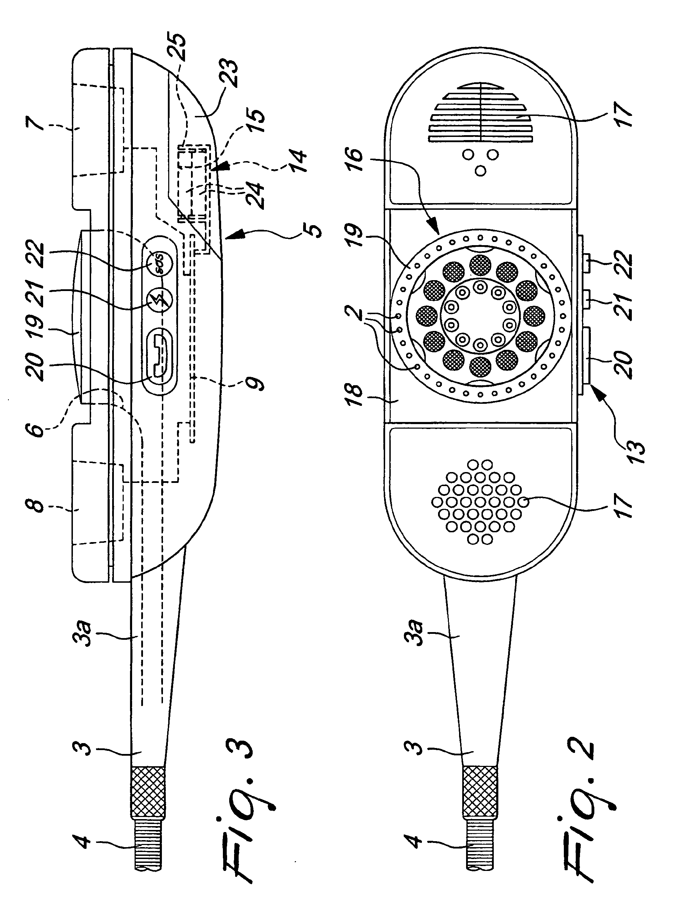

With reference to Figure 2, the shower head is of the type which comprises a plurality of water ejection nozzles 2 for spraying the body of the user and has at least one end 3 for connection to a water supply duct 4, which is connected to the water mains (Figure 1) and is for example of the flexible type. The end 3 is associated with a substantially cylindrical and elongated handle 3a, which is crossed internally by a sort of channel 3b for conveying water (clearly shown in particular in Figure 4). The handle 3a (as well as other portions of the surface of the head) can be conveniently covered with a more or less extensive layer of antislip material, such as rubber or the like.

According to the invention, the head advantageously comprises at least one box-like body 5, which is crossed by water outflow paths 6 which are shaped conveniently and are adapted to connect the duct 4 to the nozzles 2; the box-like body 5 accommodates, substantially hermetically, at least one speaker 7 and at least one microphone 8, which are connected functionally to means 9 for transmitting and receiving signals by way of ordinary electrical cables or other equivalent connecting elements. The transmission and reception means 9, which comprise at least one antenna and other substantially known components, can be for example conveniently integrated on a board for electronic circuits or the like.

The transmission and reception means 9 are conveniently linked by radio to at least one remote telephone communications control unit 10, substantially of a known type, which is connected to a public line 11; the control unit 10 can also be connected to a transmitting and receiving portable cordless set 12 of the conventional type.

Conveniently, the speaker 7, the microphone 8 and the transmission and reception means 9 are controlled by communication selection and control elements 13 and by independent electric power supply means 14, which are accommodated in an appropriate compartment 15 provided in the box-like body 5.

Conveniently, the box-like body 5 forms at least one functional surface 16, with which the microphone 8 and the speaker 7 are associated, said microphone and speaker being connected to the outside by means of respective watertight openings 17.

The functional surface 16 forms an ejection region 18, on which the nozzles 2 are distributed. The ejection region 18 is preferably arranged substantially centrally on the box-like body 5, between the speaker 7 and the microphone 8. In greater detail, the nozzles 2 are distributed on a sort of disk 19, which is rigidly coupled to the injection region 18; the disk 19 can be fixed or can be advantageously rotatable manually with respect to the box-like body 5, so as to allow to adjust the ejection ports and therefore the intensity of the water jets, in a fully conventional manner.

The communication control and selection elements 13 comprise advantageously a first switch 20, which is adapted to link selectively by radio the transmission and reception means 9 to the remote telephone communication control unit 10, at the user's full discretion; in other words, the first switch 20, connected to the transmission and reception means 9 by way of ordinary cables, allows to take the call when an acoustic warning (for example a ring tone) that arrives from the control unit 10 warns the user of an incoming telephone call.

The communication control and selection elements 13 further comprise conveniently a second switch 21, which is adapted to connect and disconnect selectively the independent electric power supply means 14 to the microphone 8, to the speaker 7 and to the transmission and reception means 9, so as to allow to save energy during inactive periods, i.e., when the shower is not being used and therefore calls need not to be received from inside the shower.

The communication selection and control elements 13 further comprise conveniently a third switch 22, which is connected to the transmission and reception means 9 by way of ordinary cables and allows to transmit to the remote telephone communication control unit 10 a signal requesting an emergency intervention, for example of the acoustic type, if the user has an urgent need for help (particularly recommended for individuals who are not self-sufficient).

Conveniently, the first switch 20, the second switch 21 and the third switch 22 are of the type with an external watertight button, for example covered with a suitable sheath made of rubber or the like, and are provided substantially along one of the sides of the box-like body 5, so that they can be actuated with a single finger at any time.

The box-like body 5 has, on its outer surface, a watertight access panel 23, which is for example fixed by interlocking or is articulated to the box-like body 5 and is adapted to close hermetically the compartment 15 that accommodates the independent electric power supply means 14.

The independent electric power supply means 14 comprise advantageously at least one removable battery 24, which is associated with respective terminals 25 connected to the transmission and reception means 9, to the speaker 7 and to the microphone 8. In relation to the power supply voltage of the shower head, it is possible to provide a plurality of batteries 24 connected in series; the batteries 24 can be constituted by ordinary disposable batteries. As an alternative, batteries 24 of the rechargeable type may also be used.

The method of use of the shower head suitable for telephone communication according to the invention is as follows. The user uses the shower head according to the invention as a normal shower head, adjusting the intensity and temperature of the jet of water both by means of the traditional faucets of the shower enclosure and by means of the manual rotation of the disk 19. It is up to the user to press beforehand the second switch 21, so as to ensure the electric power supply of the speaker 7, the microphone 8 and the transmission and reception means 9 if they must be used. If an acoustic warning that arrives from the remote control unit 10 warns the user of an incoming call, said user needs only to completely close the dispensing of water from the nozzles 2 and press the first switch 20, so as to take the line and answer the call as occurs with any cordless transceiver.

Once the call has ended, the user again presses the first switch 20 to interrupt the call; when he or she leaves the shower, the user also presses the second switch 21, so as to disconnect the batteries 24 from the speaker 7, from the microphone 8 and from the transmission and reception means 9, allowing to save energy in periods when the shower is not being used.

It has thus been shown that the invention achieves the proposed aim and objects.

The shower head according to the invention allows the user to answer promptly any incoming telephone call when he or she is under the shower without having to resort to awkward and expensive portable devices.

Advantageously it is possible to provide a luminous indicator (for example a flashing LED or the like) which is adapted to indicate an incoming call, if the ring tone cannot be heard.

The invention thus conceived is susceptible of numerous modifications and variations, all of which are within the scope of the appended claims.

In an alternative embodiment, it is possible to associate with said shower head a small keypad, which is functionally connected to the transmission and reception means 9 and is adapted to dial a telephone number in order to make an outside call.

All the details may further be replaced with other technically equivalent ones.

The embodiment of the present invention shall be carried out in the most scrupulous compliance with the statutory and regulatory provisions related to the products of the invention or correlated thereto and following any required authorization of the corresponding competent authorities, with particular reference to regulations related to safety, environmental pollution and health.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A shower head suitable for telephone communication, comprising a plurality of water ejection nozzles (2), at least one end (3) for connection to a water supply duct (4) connected to the water mains and at least one box-like body (5) crossed by water outflow paths (6) which are adapted to connect said duct (4) to said plurality of nozzles (2), **characterized in that** said box-like body accommodates internally, substantially hermetically, at least one speaker (7) and at least one microphone (8), which are functionally connected to signal transmission and reception means (9), said means being linked by radio to at least one remote control unit (10) for telephone communication which is connected to the public line (11), said speaker (7), said microphone (8) and said transmission and reception means (9) being controlled by communication control and selection elements (13) and by autonomous power supply means (14) accommodated in a compartment (15) of said box-like body (5), said box-like body (5) forming at least one front functional surface (16), with which said speaker (7) and said microphone (8) are associated, said speaker and said microphone being connected to the outside through respective watertight openings (17).

2. The shower head according to claim 1 , **characterized in that** said functional surface (16) forms a water ejection region (18) on which said nozzles (2) are distributed.

3. The shower head according to claim 2, **characterized in that** said ejection region (18) is arranged substantially centrally between said speaker (7) and said microphone (8).

4. The shower head according to one or more of the preceding claims, **characterized in that** said communication control and selection elements (13) comprise a first switch (20), which is adapted to link selectively by radio said transmission and reception means (9) to said remote telephone communication control unit (10), at the user's discretion.

5. The shower head according to one or more of the preceding claims, **characterized in that** said communication control and selection elements (13) comprise a second switch (21), which is adapted to connect and disconnect selectively said autonomous electrical power supply means (14) to said speaker (7), said microphone (8), and said transmission and reception means (9), so as to allow energy saving in periods of inactivity.

6. The shower head according to one or more of the preceding claims, **characterized in that** said communication control and selection elements (13) comprise a third switch (22), which is adapted to transmit to said remote telephone communication control unit (10) a signal requesting an emergency intervention.

7. The shower head according to one or more of the claims 4 to 6, **characterized in that** said first switch (20), said second switch (21) and said third switch (22) are of the type with a watertight button.

8. The shower head according to one or more of the preceding claims, **characterized in that** said communication control and selection elements (13) are provided externally and substantially along one of the sides of said box-like body (5), so that they can be actuated with a single finger at any time.

9. The shower head according to one or more of the preceding claims, **characterized in that** said end (3) is associated with an elongated handle (3a) crossed internally by a water conveyance channel (3b).

10. The shower head according to one or more of the claims 2 to 9, **characterized in that** said plurality of nozzles (2) is distributed on a sort of disk (19), which is rigidly coupled to said ejection region (18) of said box-like body (5).

11. The shower head according to claim 10, **characterized in that** said disk (19) can be rotated manually so as to allow to adjust the intensity of the water jets.

12. The shower head according to one or more of the preceding claims, **characterized in that** said compartment (15) for said autonomous electric power supply means (14) is closed by at least one removable watertight panel (23).

13. The shower head according to one or more of the preceding claims, **characterized in that** said autonomous electric power supply means (14) comprise at least one removable battery (24), which is associated with respective electrical terminals (25), which are connected to said transmission and reception means (9), to said speaker (7) and to said microphone (8).

14. The shower head according to claim 13, **characterized in that** said removable battery (24) is of the disposable type.

15. The shower head according to o claim 13 or 14, **characterized in that** said removable battery (24) is of the rechargeable type.

16. The shower head according to one or more of the preceding claims, **characterized in that** it comprises a keypad which is functionally connected to said transmission and reception means (9) and is adapted to dial a telephone number in order to make an outside call.

## Patentansprüche

1. Duschkopf für Telefonkommunikation, umfassend eine Vielzahl von Wasserabgabedüsen (2), zumindest ein Ende (3) zum Anschließen an eine an die Hauptwasserleitung angeschlossene Wasserversorgungsleitung (4) und zumindest einen kastenförmigen Körper (5), der von Wasserausflusswegen (6) durchquert wird, die dazu geeignet sind, die Leitung (4) mit der Vielzahl von Düsen (2) zu verbinden, **dadurch gekennzeichnet, dass** der kastenförmige Körper innen, im Wesentlichen hermetisch abgeschlossen, zumindest einen Lautsprecher (7) und zumindest ein Mikrofon (8) beherbergt, die funktionsfähig mit Signalsende- und -empfangsmitteln (9) verbunden sind, wobei die Mittel über Funk mit zumindest einer an die öffentliche Leitung (11) angeschlossenen Fernsteuereinheit (10) für Telefonkommunikation in Verbindung stehen, wobei der Lautsprecher (7), das Mikrofon (8) und die Sende- und Empfangsmittel (9) durch Kommunikationssteuer- und -wählelemente (13) und durch autonome Stromversorgungsmittel (14) gesteuert werden, die in einem Fach (15) des kastenförmigen Körpers (5) untergebracht sind, wobei der kastenförmige Körper (5) zumindest eine vordere Funktionsfläche (16) ausbildet, mit der der Lautsprecher (7) und das Mikrofon (8) verbunden sind, wobei der Lautsprecher und das Mikrofon über jeweilige wasserdichte Öffnungen (17) mit der Außenumgebung verbunden sind.

2. Duschkopf nach Anspruch 1, **dadurch gekennzeichnet, dass** die Funktionsfläche (16) einen Wasserabgabebereich (18) ausbildet, auf dem die Düsen (2) verteilt sind.

3. Duschkopf nach Anspruch 2, **dadurch gekennzeichnet, dass** der Abgabebereich (18) im Wesentlichen mittig zwischen dem Lautsprecher (7) und dem Mikrofon (8) angeordnet ist.

4. Duschkopf nach einem oder mehreren der vorhergehenden Ansprüche, **dadurch gekennzeichnet, dass** die Kommunikationssteuer- und -wählelemente (13) einen ersten Schalter (20) enthalten, der dazu geeignet ist, nach Belieben des Benutzers die Sende- und Empfangsmittel (9) über Funk mit der Telefonkommunikationsfernsteuereinheit (10) wahlweise zu verbinden.

5. Duschkopf nach einem oder mehreren der vorhergehenden Ansprüche, **dadurch gekennzeichnet, dass** die Kommunikationssteuer- und -wählelemente (13) einen zweiten Schalter (21) enthalten, der dazu geeignet ist, die autonomen Stromversorgungsmittel (14) mit dem Lautsprecher (7), dem Mikrofon (8) und den Sende- und Empfangsmitteln (9) wahlweise zu verbinden und von diesen zu trennen, um in inaktiven Zeiten das Einsparen von Energie zu ermöglichen.

6. Duschkopf nach einem oder mehreren der vorhergehenden Ansprüche, **dadurch gekennzeichnet, dass** die Kommunikationssteuer- und -wählelemente (13) einen dritten Schalter (22) enthalten, der dazu geeignet ist, an die Telefonkommunikationsfernsteuereinheit (10) ein Signal zu senden, das einen Noteingriff anfordert.

7. Duschkopf nach einem oder mehreren der Ansprüche 4 bis 6, **dadurch gekennzeichnet, dass** der erste Schalter (20), der zweite Schalter (21) und der dritte Schalter (22) von der Art mit einer wasserdichten Taste sind.

8. Duschkopf nach einem oder mehreren der vorhergehenden Ansprüche, **dadurch gekennzeichnet, dass** die Kommunikationssteuer- und -wählelemente (13) außen und im Wesentlichen entlang einer der Seiten des kastenförmigen Körpers (5) vorgesehen sind, so dass sie jederzeit mit einem einzigen Finger betätigbar sind.

9. Duschkopf nach einem oder mehreren der vorhergehenden Ansprüche, **dadurch gekennzeichnet, dass** das Ende (3) mit einem länglichen Griff (3a) verbunden ist, der innen von einem Wasserförderkanal (3b) durchquert wird.

10. Duschkopf nach einem oder mehreren der Ansprüche 2 bis 9, **dadurch gekennzeichnet, dass** die Vielzahl von Düsen (2) auf einer Art Scheibe (19) verteilt ist, die fest an den Abgabebereich (18) des kastenförmigen Körpers (5) gekoppelt ist.

11. Duschkopf nach Anspruch 10, **dadurch gekennzeichnet, dass** die Scheibe (19) manuell drehbar ist, um das Einstellen der Intensität der Wasserstrahlen zu ermöglichen.

12. Duschkopf nach einem oder mehreren der vorhergehenden Ansprüche, **dadurch gekennzeichnet, dass** das Fach (15) für die autonomen Stromversorgungsmittel (14) durch zumindest eine abnehmbare wasserdichte Platte (23) verschlossen ist.

13. Duschkopf nach einem oder mehreren der vorhergehenden Ansprüche, **dadurch gekennzeichnet, dass** die autonomen Stromversorgungsmittel (14) zumindest eine entfernbare Batterie (24) enthalten, die mit jeweiligen elektrischen Anschlüssen (25) verbunden ist, die mit den Sende- und Empfangsmitteln (9), mit dem Lautsprecher (7) und mit dem Mikrofon (8) verbunden sind.

14. Duschkopf nach Anspruch 13, **dadurch gekennzeichnet, dass** die entfernbare Batterie (24) eine Wegwerfbatterie ist.

15. Duschkopf nach Anspruch 13 oder 14, **dadurch gekennzeichnet, dass** die entfernbare Batterie (24) eine wiederaufladbare Batterie ist.

16. Duschkopf nach einem oder mehreren der vorhergehenden Ansprüche, **dadurch gekennzeichnet, dass** er ein Tastenfeld enthält, das funktionsfähig mit den Sende- und Empfangsmitteln (9) verbunden ist und dazu geeignet ist, eine Telefonnummer zu wählen, um ein Ferngespräch zu führen.

## Revendications

1. Pomme de douche adaptée à la communication téléphonique, comprenant une pluralité de buses d'éjection d'eau (2), au moins une extrémité (3) pour la liaison à un conduit d'alimentation en eau (4) raccordé au réseau de distribution d'eau et au moins un corps en forme de boîtier (5) traversé par des voies d'écoulement d'eau (6) qui sont conçues pour relier ledit conduit (4) à ladite pluralité de buses (2), **caractérisée en ce que** ledit--corps en forme de boîtier loge à l'intérieur, sensiblement de manière hermétique, au moins un haut-parieur (7) et au moins un microphone (8), qui sont fonctionnellement raccordés à des moyens de transmission et de réception de signaux (9), lesdits moyens étant liés par radio à au moins une unité de commande à distance (10) pour la communication téléphonique qui est raccordée à la ligne publique (11), ledit haut-parleur (7), ledit microphone (8) et lesdits moyens de transmission et de réception (9) étant commandés par des éléments de commande et de sélection de communication (13) et par des moyens d'alimentation en courant autonomes (14) logés dans un compartiment (15) dudit corps en forme de boîtier (5), ledit corps en forme de boîtier (5) formant au moins une surface fonctionnelle avant (16), à laquelle ledit haut-parleur (7) et ledit microphone (8) sont associés, ledit haut-parleur et ledit microphone étant reliés à l'extérieur à travers des ouvertures respectives étanches à l'eau (17).

2. Pomme de douche selon la revendication 1, **caractérisée en ce que** ladite surface fonctionnelle (16) forme une région d'éjection d'eau (18) sur laquelle sont réparties lesdites buses (2).

3. Pomme de douche selon la revendication 2, **caractérisée en ce que** ladite région d'éjection (18) est agencée sensiblement centralement entre ledit haut-parleur (7) et ledit microphone (8).

4. Pomme de douche selon une ou plusieurs des revendications précédents, **caractérisée en ce que** lesdits éléments de commande et de sélection de communication (13) comprennent un premier commutateur (20), qui est adapté à relier sélectivement par radio lesdits moyens de transmission et de réception (9) à ladite unité de commande de communication téléphonique à distance (10), à la discrétion de l'utilisateur.

5. Pomme de douche selon une ou plusieurs des revendications précédentes, **caractérisée en ce que** lesdits éléments de commande et de sélection de communication (13) comprennent un deuxième commutateur (21), qui est conçu pour raccorder et séparer sélectivement lesdits moyens d'alimentation de puissance électrique autonome (14) dudit haut-parleur (7), dudit microphone (8) et desdits moyens de transmission et de réception (9), de façon à permettre des économies d'énergie en périodes d'inactivité.

6. Pomme de douche selon une ou plusieurs des revendications précédentes, **caractérisée en ce que** lesdits éléments de commande et de sélection de communication (13) comprennent un troisième commutateur (22), qui est conçu pour transmettre à ladite unité de commande de communication téléphonique à distance (10), un signal nécessitant une intervention d'urgence.

7. Pomme de douche selon une ou plusieurs des revendications 4 à 6, **caractérisée en ce que** ledit premier commutateur (20), ledit deuxième commutateur (21) et ledit troisième-commutateur (22) sont du type à bouton étanche à l'eau.

8. Pomme de douche selon une ou plusieurs des revendications précédentes, **caractérisée en ce que** lesdits éléments de commande et de sélection de communication (13) sont prévus extérieurement et sensiblement le long d'un des côtés dudit corps en forme de boîtier (5) de sorte qu'ils peuvent être actionnés à l'aide d'un seul doigt à tout moment.

9. Pomme de douche selon une ou plusieurs des revendications précédente, **caractérisée en ce que** ladite extrémité (3) est associée à une poignée allongée (3a) traversée intérieurement par un canal d'amenée de l'eau (3b).

10. Pomme de douche selon une ou plusieurs des revendications 2 à 9, **caractérisée en ce que** ladite pluralité de buses (2) est répartie sur une sorte de disque (19), qui est rigidement relié à ladite région d'éjection (18) dudit corps en forme de boîtier (5).

11. Pomme de douche selon la revendication 10, **caractérisée en ce que** ledit disque (19) peut être tourné manuellement de façon à permettre le réglage de l'intensité des jets d'eau.

12. Pomme de douche selon une ou plusieurs des revendications précédentes, **caractérisée en ce que** ledit compartiment (15) pour les moyens d'alimentation en courant électrique (14) est fermé par au moins un panneau amovible étanche à l'eau (23).

13. Pomme de douche selon une ou plusieurs des revendications précédentes, **caractérisée en ce que** lesdits moyens d'alimentation en courant électrique autonomes (14) comprennent au moins une batterie amovible (24), qui est associée à des bornes électriques respectives (25), qui sont reliées auxdits moyens de transmission et de réception (9), audit haut-parleur (7) et audit microphone (8).

14. Pomme de douche selon la revendication 13, **caractérisée en ce que** ladite batterie amovible (24) est du type jetable.

15. Pomme de douche selon la revendication 13 ou 14, **caractérisée en ce que** ladite batterie amovible (24) est du type rechargeable.

16. Pomme de douche selon une ou plusieurs des revendications précédentes, **caractérisée en ce qu'**elle comprend un clavier qui est fonctionnellement relié auxdits moyens de transmission et de réception (9) et est conçu pour composer un numéro téléphonique de façon à effectuer un appel externe.
